# EUROPEAN PATENT SPECIFICATION

(11) **EP 2 978 306 B1**
(45) Date of publication and mention of the grant of the patent: **13.05.2020**
(21) Application number: 14717889.1
(22) Date of filing: 27.03.2014
(51) Int. Cl.: A01M 5/08, A01M 5/04

(54) **PEST REMOVAL DEVICE**
VORRICHTUNG ZUM ENTFERNEN VON SCHÄDLINGE
DISPOSITIF POUR ENLEVER LES NUISIBLES

(30) Priority: 28.03.2013 SE 1350402
(43) Date of publication of application: 03.02.2016
(73) Proprietor: Lyckegård Group AB, 371 92 Karlskrona (SE)
(72) Inventor: CARLSSON, Jonas, 371 94 Lyckeby (SE)
(74) Representative: Bergenstråhle Group AB
(86) International application number: PCT/SE2014/050372
(87) International publication number: WO 2014/158088

(56) References cited:
- DE-U1-202007 016 904
- FR-A- 1 117 762
- US-A- 1 562 627
- US-A- 1 710 683
- US-A- 2 517 292

## Description

### Technical field

The present invention relates generally to a device for removing pest and other material from vegetation or crops.

### Background art

In prior art it is known to use chemical means for removing pest in fields of vegetation and crops.

It is further known to use mechanical means for collecting harmful bugs or pests in plants arranged in rows. Such means are known from DE202007016904 wherein driven wheels orthogonal to plants arranged in rows forces harmful bugs plants into collection vessels.

A drawback with the known solution according to the art is that forcing harmful bugs into a vessel in a direction perpendicular to the direction of travel will inevitably lead to a large number of harmful bags not being forced into the collection vessels but will be allowed to escape in a direction of travel or opposite the direction of travel.

Another drawback of the known solution is the limited flexibility in terms of which harmful bugs can be collected, as the height of the driven wheels is used to collect the bugs living at upper young shots of potato plants wherein the possibility of collecting harmful bugs in the lower parts of the plants is limited. A further drawback is the risk of the already collected bugs leaving the collection vessels top opening.

Prior art document D1, FR-A-1117762, relates to an apparatus for capturing and destroying insect pests of rapeseed or other seedlings; Said apparatus comprising, mounted at the front of a tractor or other suitable vehicle, a kind of comb formed of suitably spaced pipes provided with gutter pads tapered at their front end and connected at their rear end to a collector connected to a blower, the air stream of which sucks and discharges insects picked up in said gutters as they pass between the rows of plants in a suitable removable receptacle. The apparatus is supplemented by a rotary shaking device, the elements of which, as the vehicle advances, slightly agitates the stems of the plants without damaging them. Prior art document D2, US-A-1562627, relates to insect killing devices, and particularly to an attachment designed to be used in connection with an automobile or tractor and disposed in front thereof. The attachment having therein a beater or other like means, and an insect killing device which is driven by the vehicle, the beater acting to knock the insects into the pan of the attachment and to kill the insects by contact with the beater.

### Summary of invention

An object of the present invention is to alleviate some of the disadvantages of the prior art and to provide an improved pest removal device that more effectively collects and removes pest as well as seed in a field of vegetation or crops.

Another object of the invention is to provide a pest removal device that is modular and adapted to also collect undesired weed in a field of vegetation or crops according to the specific needs of an operator.

In a first aspect there is provided a pest removal device adapted to be moved in relation to a ground surface of a field, the pest removal device extending in at least a first direction and a second direction, wherein the first direction is the direction of travel of the pest removal device and the second direction is non-parallel to the first direction, comprising a frame, wherein the frame comprises at least one frame section wherein a plurality of stirring devices are arranged on the frame section, wherein said plurality of stirring devices are arranged spaced apart from each other at a distance from each other in the second direction, the frame section further comprising
a brush device pivotally arranged to the frame section to pivot around a pivot axis,
a collecting device,
wherein the brush device is adapted to rotate in relation to the frame section whereby pest and/or other material is forced towards the collecting device upon rotation of the brush device for collecting of pest and/or other material in the collecting device, wherein said plurality of stirring devices are adapted for receiving a knife device, and a knife device is arranged on each of said plurality of stirring devices, or wherein said plurality of stirring devices form knife devices.

An advantage of using stirring devices arranged in a comb-like manner together with a brush device and collecting device is an increased efficiency in collecting pest and other material, due to the co-operative nature of these features, wherein pest from the entire vegetation and not solely from the top portions of the vegetation may collected, and wherein the brush device acts in a fan-like manner to force pest towards the collecting device.

According to one embodiment, the pivot axis extends in the second direction.

According to another embodiment, said plurality of stirring devices are arranged closer to the ground surface than the pivot axis, wherein the stirring devices are formed as long and narrow bodies and extends in the first direction in their longest extension direction.

According to one embodiment, the pivot axis is arranged above the stirring devices in a third direction, non-parallel to the first and second directions, and in a rear position of the stirring devices in a first direction, wherein the collection device is arranged in a rear position of both the pivot axis and the stirring devices in a first direction. An advantage due to the spatial relation of the features is a further increased efficiency in collecting pest or other material from a field of vegetation or crops, since the action of the brush device acts in opposite direction compared to the movement of the collecting device and pest removal device itself in relation to the ground.

According to one embodiment, the distance between two consecutive stirring devices are adjustable.

According to one embodiment, said plurality of stirring devices are adapted for receiving a knife device , or forms a knife device , wherein the distance between two consecutive knife devices are adjustable. An advantage of this is the ability to easily adapt certain sections of the pest removal device into a combined pest removal and vegetation cutting device according to specific needs for instance in use in a row tillage.

According to one embodiment, a position adjusting device is provided for adjusting the position of the brush device in a plane defined by the first and third directions. By adjusting the position of the brush a variation of fields of vegetation, age of the vegetation as well as type of pest to be removed may be addressed and optimized.

According to one embodiment, the collecting device comprises a wall portion and an opening in the wall portion , is pivotally arranged in relation to the frame section around a pivot axis , wherein the collecting device is adapted to be in a first position wherein the opening is essentially directed towards the first direction, and a second position wherein the opening is directed towards a third direction, wherein the third direction is perpendicular to the second direction. By this, an improved emptying of the collection device is achieved that facilitates and reduces time for emptying.

According to one embodiment, the third direction is essentially directed towards the earth's center of gravitation, whereby collected pest and other material falls out of the collecting device by the aid of gravitation in the second position.

According to one embodiment, the collecting device comprises a compressing device for compressing the collected pest and other material in the container, to make it more compact. An advantage of this is that the time period between emptying the collecting device may be prolonged and a reduced risk that the collecting device is filled in the middle of a field far away from a location wherein the collecting device is emptied which will increase the working time.

According to one embodiment, the compressing device comprises a hydraulically driven compression device, such a hydraulic press.

According to one embodiment, the frame comprises a plurality of frame sections adapted to be connected to each other. An advantage of this is that there is a large freedom in terms of adapting the width of the pest removal device based on need, facilitated transportation of the same, as well as using the device in a row tillage wherein some sections may function both as vegetation cutting device and pest removal device and other sections may function as a pest removal device alone.

According to one embodiment, the second direction is perpendicular to the first direction, and the third direction is perpendicular to the first and second directions, wherein the first direction corresponds to an x-direction, the second direction corresponds to an y-direction and the third direction corresponds to a z-direction of a coordinate system.

According to one embodiment, the pest removal device , further comprises a fan device or pressurized air creation device or air flow creation device, for creating an air flow , and openings or perforations in the pivot axis, wherein the pest removal device is adapted to direct the air flow from the pivot axis towards the collecting device . An advantage of this is a pest removal device with an increased efficiency as less pest is missing the collecting device as it will be forced towards the collecting device and as the disturbed pest will have a reduced ability and time to change direction and escape the collecting device and the external action against it working in a direction towards the collecting device..

According to one embodiment, the pest removal device further comprises a fan device or negative air pressure creation device or air pump or suction device, for creating a an air flow wherein the air flow may be directed towards the collecting device . Through this, an increased pest removal device is achieved as less pest or other material is allowed to miss the collecting device during collecting, but after being collected a lesser among of pest or other material is allowed to leave the collecting device. Further, a cheaper collecting device without specific openings or forms or use of chemicals may be used that still retains the pest or other material inside the collecting device until emptying of the collecting device.

### Brief description of drawings

The invention is now described, by way of example, with reference to the accompanying drawings, in which:
Fig. 1 shows a perspective view of a pest removal device.
Fig. 2 shows a perspective view of the back portion of the pest removal device 1 according to Fig. 1.
Fig. 3 shows a side view of the pest removal device according to Fig. 1.
Fig. 4 shows a side view of the pest removal device according to Fig. 1.
Fig. 5 shows a side view of the pest removal device according to Fig. 1.
Fig. 6 shows a cross-section side view of the pest removal device according to Fig. 1.
Fig. 7 shows a cross -sectionside view of the pest removal device according to Fig. 1.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

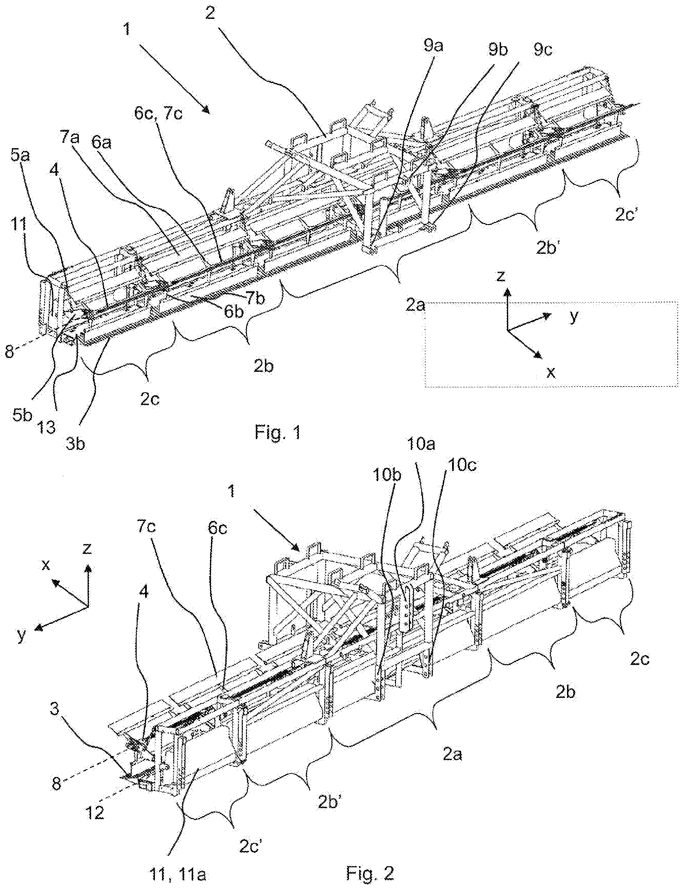

Fig. 1 shows a perspective view of a pest removal device 1 comprising a frame 2. The pest removal device 1 extends in at least a first direction and a second direction, wherein the first direction is the direction of travel of the pest removal device and the second direction is non-parallel to the first direction.

According to one embodiment, the second direction is perpendicular to the first direction, wherein the first direction corresponds to the direction x and the second direction corresponds to the direction y of the coordinate system as defined in Fig.1 -Fig. 7. The frame 2 is adapted to be connected to a vehicle, preferably a tractor at connection devices 9a, 9b, 9c, 10a, 10b, 10c, and thus adapted to be moved in relation to the ground of a field of vegetation or crops. The frame 2 may be connected at a front portion of a tractor or at a rear portion of a tractor. The frame 2 may comprise several frame sections 2a, 2b, 2b' 2c, 2c' which can be connected to each other, whereby the width of the frame 2 and the pest removal device 1 increases. According to one embodiment, the frame sections 2a, 2b, 2b' 2c, 2c' have a length of between 1 m and 3m. According to one embodiment, the pest removal device of Fig. 1 has a width of ca 8m, preferably 8, 10 m. According to several different embodiments, pest removal device 1 may have a width of 3, 6, 9, 12, 24, or 36 m respectively. According to one embodiment, the width of the frame sections 2a, 2b, 2b' 2c, 2c', may be formed with any given width and any frame section 2a, 2b, 2b' 2c, 2c' of any given width may be connected to another 2a, 2b, 2b' 2c, 2c' of any given width. According to one embodiment, the frame 2 and pest removal device 1 will increase its length in the second direction upon connecting the frame sections 2a, 2b, 2b' 2c, 2c'. Center frame section 2a is formed by a portion comprising the connection devices 9a, 9b, 9c, 10a, 10b, 10c and usually forms the center of the frame 2. First side frame section 2b, second side frame section 2b', may be arranged on each side of the center frame section 2a respectively, and first extension frame section 2c and second extension frame section 2c' may be arranged on each side of the first side frame section 2b, second side frame section 2b' respectively. The frame sections 2b, 2b' 2c, 2c' may be arranged to the center section 2a according to the specific needs both in terms of the required width of the pest removal device as well as specific use as will be further explained below. According to one embodiment, the frame sections 2a, 2b, 2b' , 2c, 2c' will facilitate packaging, storing and transportation of the same when not connected to each other as it will be possible to package, store and transport the same frame section in a more compact manner. According to one embodiment, wheels (not shown) may be arranged on the underside of the frame 2 via wheel arms supporting the wheels and arranged on the underside of the frame 2 to allow the frame 2 to roll on the ground. According to one embodiment, the frame 2 is height adjustable in relation to the ground, i.e. in a z-direction of the coordinate system of Fig. 1-3. The height of the frame 2 may be adjustable by adjusting the length of the wheel arms.

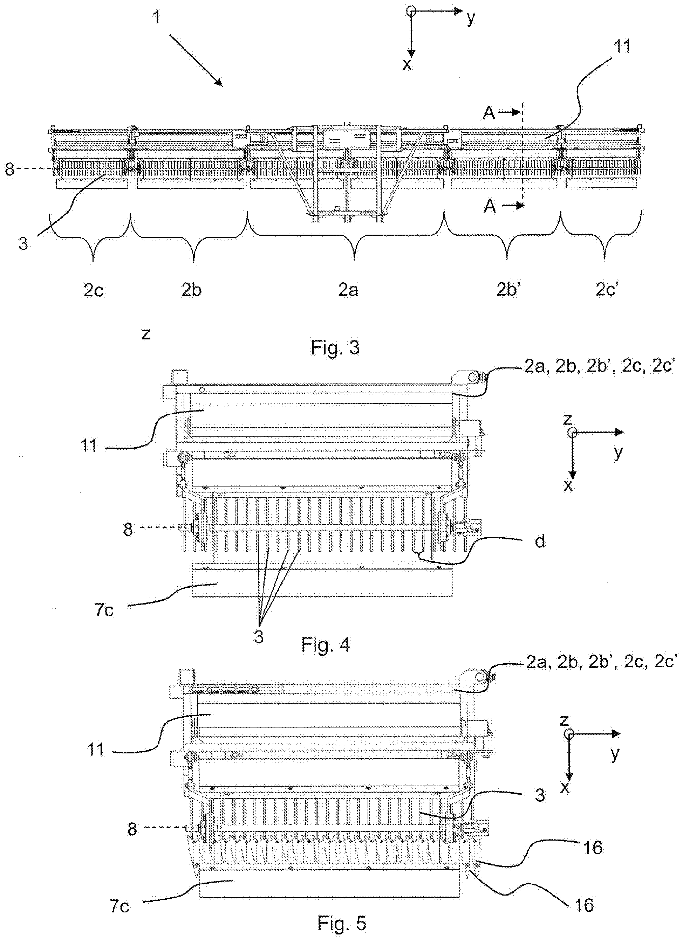

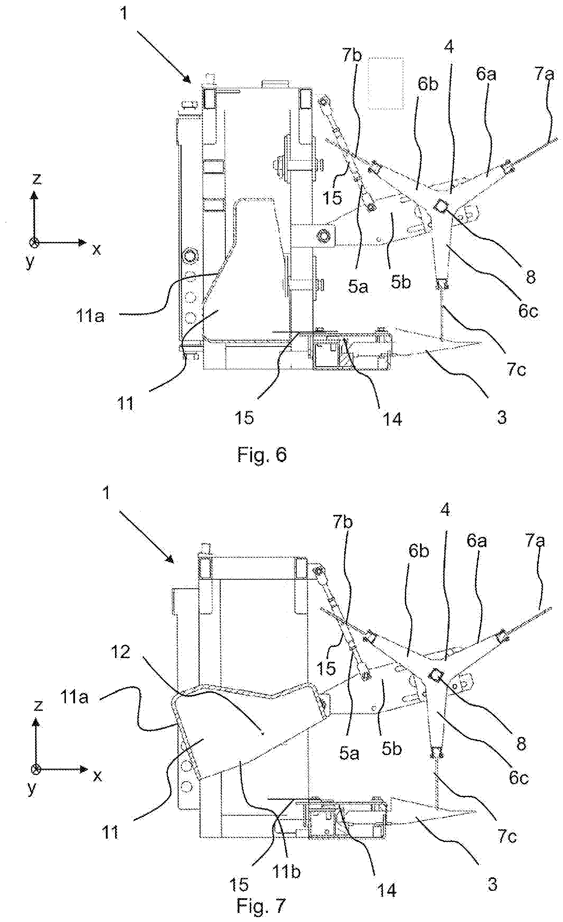

A brush device 4, as can be further viewed also in Fig. 6 and Fig. 7 showing cross section views along section A-A of Fig. 3, is arranged to the frame 2/frame sections 2a, 2b, 2b' 2c, 2c' via arms 5a, 5b. According to one embodiment, each frame section 2a, 2b, 2b' 2c, 2c' comprises a brush device 4. The brush device 4 comprises at least one brush arm 6a comprising a brush 7a, wherein the brush device 4 via arm 6a is pivotally arranged to the arm 5a, 5b or directly to the frame 2 and adapted to rotate in relation to the arms 5a, 5b or frame 2 respectively. According to one embodiment, the brush device 4 extends essentially along the length of the frame section 2a, 2b, 2b' 2c, 2c', and the brush device is arranged via a first and second set of arms 5a, 5b on each side of the brush device 4, arranged essentially at end portions of the frame sections 2a, 2b, 2b' 2c, 2c'. The brush device 4 is arranged to rotate around pivot axis 8. According to one embodiment, the brush device 4 comprises a plurality of brush arms 6a, 6b, 6c each comprising a respective brush 7a, 7b, 7c, whereby the brush arms 6a, 6b, 6c extending from a center point, or pivot shaft 8 corresponding to the pivot axis 8. According to one embodiment, the brush device 4 comprises two brush arms 6a, 6b. According to one embodiment, represented in Fig. 1, the brush device 4 comprises three brush arms 6a, 6b, 6c extending from and equally distributed from the center point 8, i.e. the pivot axis 8, whereby the angle between two consecutive brush arms 6a, 6b, 6c is 120°. According to one embodiment, each of the plurality of brush devices 4 may have a varying and different number of brush arms 6a, 6b, 6c when comparing to each another of the plurality of brush devices 4. A driving device (not shown), which may according to one embodiment, be a hydraulic motor connected to the hydraulic contact of the tractor via hydraulic lines, is adapted to drive the rotation of the brush device 4. According to one embodiment, the brushes 7 are releasably connected to the brush arms, e.g. in a snap fit mechanical manner. According to one embodiment, the pivot axis 8 extends in the second direction. According to one embodiment the direction of rotation is preferably in a y-direction, according to the coordinate system defined in Fig. 1, and Fig. 3, whereby the lowermost, i.e. closest to the ground, i.e. at a lowest z-position of the defined coordinate system, arm 6a, 6b, 6c and brush device 7a, 7b, 7c during rotation forces weed and pest in a backward direction, i.e. in a negative x-direction. Hence, with reference to Fig. 6 and Fig. 7, the direction of rotation is clockwise. According to one embodiment, the pest removal device comprises a device for adjusting the position and height of the brush device 4, i.e. position in a z-direction as well as an x-direction. According to one embodiment, the device for adjusting the position/height of the brush device 4 enables adjusting of the height of brush device 4 which is separate from adjusting the height of the pest removal device 1 and or stirring devices 3 as will be later defined. According to one embodiment, the device 15 for adjusting the position of the brush device 4 comprises a device for adjusting the length of arms 5a, i.e. a mechanical device, whereby the height and for aft position of the brush device 4, i.e. position in a z-direction as well as an x-direction may be adjustable. This is due to the fact that arms 5a is arranged to extend in the x-z plane. According to one embodiment, the device 15 for adjusting the position of the brush device 4 is a turnbuckle. According to one embodiment the device 15 for adjusting the position of the brush device 4 is a telescopic arrangement for length increasing of the arm 5a. According to one embodiment, the device for adjusting the position of the brush device further comprises a linear sliding adjustment of the pivot axis 8 in a horizontal manner separated from the telescopic arrangement. The device 15 for adjusting the position of the brush device 4 enables brushing of vegetation and pest of different height above ground. According to one embodiment, the pivot axis 8 or pivot shaft 8 may be formed by a hollow shaft. According to one embodiment, the pivot shaft 8 is fixed in space wherein the brush arms 6a, 6b, 6c are adapted to rotate around the pivot shaft via a roller bearing or other means. According to one embodiment, fan outlet openings or perforations (not shown) are formed in the hollow pivot shaft 8 and directed either manually or automatically based on the position of the pivot axis/pivot shaft 8 in relation to a collecting device 11, and directed towards an opening 11b of the collecting device 11. A fan or pressurized air creation device, or air flow creation device, (not shown) may connected to the pivot shaft 8 for creation of an air flow or moving air, whereby an air flow may be led from the fan or pressurized air creation device through the pivot shaft 8 via the fan outlet openings or perforations of the pivot shaft towards the collecting device 11. Vegetation, pest or other material to be collected may thus be further forced and led by the air flow towards the collecting device faster and with a reduced risk that the vegetation, pest or other material to be collected misses the collecting device 11.

A collecting device 11 is arranged to the respective frame section 2a, 2b, 2b' 2c, 2c'. According to one embodiment, the collecting device 11 primarily extends in the second direction, i.e. extends longer in the second direction than any other direction. According to one embodiment, the collection device 11 comprises a wall portion 11a and an opening 11b in the wall portion. According to one embodiment, the collecting device 11 is arranged behind the stirring devices 3 in the first direction, i.e. the movement direction, of the pest removal device 1. In other words, the collecting device 11 is arranged opposite the first direction/in a negative first direction in relation to the stirring devices 3. According to one embodiment, the collecting device 11 is pivotally arranged to rotate in relation to the frame section 2a, 2b, 2b' 2c, 2c' around a pivot axis 12, wherein the collecting device 11 is adapted to be in a first position wherein the opening 11b is essentially directed towards the first direction, as can be seen in Fig. 6, and a second position wherein the opening is directed towards a third direction, as can be seen in Fig. 7, wherein the third direction is perpendicular to at least the second direction. According to one embodiment, the third direction is essentially directed towards the earth's center of gravitation, whereby collected pest and other material falls out of the collecting device 11 by the aid of gravitation in the second position. According to one embodiment, the third direction is in a negative z-direction, i.e. perpendicular to the first and second directions. According to one embodiment, the moving of the collecting device 11 between at least the first and second positions may be carried out manually, According to one embodiment, the moving of the collecting device 11 between at least the first and second positions may be carried out by a electro driven motor. According to one embodiment, the collecting device 11 comprises a compressing device for compressing the collected pest and other material in the container to make it more compact and thereby increase the time periods between when the emptying of the collecting device 11 becomes necessary, the i.e. when the collecting device 11 is entirely filled by pest and other material. According to one embodiment, such compressing device may be a hydraulic press arranged to press the pest or other material towards a certain position in the collecting device 11. According to another embodiment, a compressing device may be a mechanical means for pressing the pest or other material towards a certain position in the collecting device 11. According to one embodiment, a fan device or negative air pressure creation device or air pump or suction device (not shown) may be arranged in to the collecting device to create a negative air pressure, or an air flow directed towards the collecting device, i.e. suck air into the collecting device 11 via the opening 11b of the collecting device 11. According to one embodiment, openings or perforations may be formed in an inner back portion of the collecting device 11 and connected to the either internal or external fan device or negative air pressure device or air pump or suction device, wherein the holes are made sufficiently small to allow air to flow but prevent vegetation, pest or other material to pass. Upon emptying of the collection device 11, preferably in a second position of the collecting device 11, the negative air pressure is reduced, stopped or turned into a positive air pressure, i.e. whereby the air flow is directed in an opposite direction, whereby vegetation or pest or other material is allowed to leave the collecting device 11. According to one embodiment, the fan device or negative air pressure device is adapted to work together with the fan device or air pressure creation device or air flow creation device of the pivot shaft 8 to create a blowing and sucking function of the pivot shaft 8 and collecting device 11 respectively, whereby the vegetation, pest or other material are collected in a very short time frame after being excised, or stirred. The created air flow will further enhance the guidance of the vegetation, pest or other material from the brush device 4 or pivot shaft 8 to the collecting device 11, thereby reducing the vegetation, pest or other material not being collected by the collecting device 11.

According to one embodiment, each frame section 2a, 2b, 2b' 2c, 2c' comprises a bridge device 13. A bridge device 13 is arranged between the fastening device 14 for receiving the stirring devices 3, and are adapted to prevent that pest and other material falls between the bridge device 13 and the collecting device during collecting of pest and other material. The bridge device 13 may be seen in Fig. 1 and protrudes from the fastening device 14 in a negative x-direction to bridge the gap between the collecting device 11 and fastening device 14.

Fig. 2 shows a perspective view of the back portion of the pest removal device 1 comprising the frame sections 2a, 2b, 2b' 2c, 2c' connected to each other.

Fig. 3 shows a side view of the pest removal device 1 according to Fig. 1, seen above, i.e. in a negative z-direction.

According to one embodiment, each frame section 2a, 2b, 2b' 2c, 2c' comprises a plurality of stirring devices 3 which are arranged with a distance from each other in a comb-like manner in a portion of the frame section 2a, 2b, 2b' 2c, 2c' wherein said plurality of stirring devices are arranged spaced apart from each other at a distance d from each other in the second direction as can be further seen in Fig. 4. Fig. 4, showing a side view of a separate frame section 2a, 2b, 2b', 2c, 2c' shows the stirring devices from above, i.e. in an negative z-direction. According to one embodiment, the stirring devices 3 are formed as long and narrow bodies and extend in the first direction in the longest extension direction.

According to one embodiment, the stirring devices 3 are arranged closer to the ground than the pivot axis 8 such that the entire vegetation may be stirred and the pest or unwanted animals/insects disturbed to leave the vegetation or crops. According to one embodiment the stirring devices 3 are arranged slightly before the pivot axis 8 of the brush device in a driving/first direction x, whereby the pest or unwanted animals/insects are first disturbed by the stirring devices 3 and then directly following the stirring action forced by the action of the brush device 4 in a backward/negative x -direction towards the collecting device 11.

According to one embodiment, the stirring devices 3 are adapted to receive knife devices 16 or cutting devices. A pest removal device 1 wherein knife devices 16 have been arranged on the stirring devices 3 can be seen in Fig. 5. Since the stirring devices 3 are arranged at a distance d from each other, the knife devices 16 will be likewise arranged at a certain distance from each other. Each knife device 16 has a sharp end directed towards the distance such that a cutting function will work towards said distance. By the arranging of the knife devices 16 on the stirring devices 3 a vegetation cutter is obtained for mechanical control of weed or other undesired crops, by treating the vegetation containing desired and undesired crops on a land/ground surface by aid of said vegetation cutter. When using knife devices 9 on the stirring devices 3, the collecting devices 11a will collect both the undesired weed and pest.

According to one embodiment, an operator of the pest removal device may selectively equip some of the frame sections 2a, 2b, 2b' 2c, 2c' with knife devices 16 by arranging the knife devices 16 onto the stirring devices 3a and thereby form a combination of a vegetation cutter and a pest removal device 1. Other frame sections 2a, 2b, 2b' 2c, 2c' may not be equipped with knife devices 16 and will thus solely work as a pest removal device 1. According to one embodiment, every second frame section 2a, 2b, 2b' 2c, 2c' may be equipped with knife devices 16 and every other second may only have the stirring devices 3, i.e. no knife devices 16, for instance during operation of the pest removal device 1 in a row tillage or row plants. As according to one embodiment, the width of the frame sections 2a, 2b, 2b' 2c, 2c', may be formed with any given width and any frame section 2a, 2b, 2b' 2c, 2c' of any given width may be connected to another 2a, 2b, 2b' 2c, 2c' of any given width, the pest removal device 1 may be used for any width of rows or distance between the rows in for instance a row tillage.

According to one embodiment, the distance d between the stirring devices 3 are adjustable. According to one embodiment, the angle of the stirring devices 3 is adjustable in a z-y plane. According to one embodiment, the angle of the stirring devices are adjustable in a x-y plane, wherein such adjusting is preferably done when pest is to be removed from fields, or wherein a cutting function is desirable on relatively thin vegetation to be cut wherein there is a relatively high straw stiffness of the same vegetation, whereby an aggressive, i.e. large angle in relation to the x-direction is preferred when for instance there is a relatively big difference in straw stiffness between the desired crops and the undesired weed In the pest removal 1 device adjusting the distance d between the stirring devices 3a will enable the pest removal device 1 to adapt to a variation of weed types and widths of the weed. The narrower the weed upon which pest are present, the narrower the distance between the stirring devices 3 needs to be adjusted to achieve a sufficient stirring effect on the vegetation or crops. Similarly, adjusting the distance d between the stirring devices 3 consequently enables the adjusting of the distance between the knife devices16 when these have been arranged on the stirring devices 3. As result of this, the thickness of the undesired weed to be cut and separated by the vegetation cutting device is adjustable which enables the vegetation cutting device to function for various types of undesired weed as wells as age of the weed. The distance d between the stirring devices 3 are thus smaller than a coarser thickness of unwanted crops/vegetation/weed, so that a desired crops/vegetation passes through the cutting function at the same time as the weed or undesired crops/vegetation is cut off or becomes damaged and which over a period of time is fading. According to one embodiment, the distance d is in the range of 10 mm≤d≤70mm, more preferably in the range of 30 mm≤d≤50mm, most preferably 40 mm.

During use of the pest removal device 1, an operator of the pest removal device 1 may thus selectively arrange the wanted number of frame sections, 2b, 2b' 2c, 2c' to be arranged to the center frame section 2a that is suitable for carrying out the removal of pest or other material from a field or row tillage comprising at least wanted vegetation or crops and pest. The operator may further selectively arrange knife devices 16 on the stirring devices 3 of all, none or some of the frame sections 2a, 2b, 2b' 2c, 2c'. According to one embodiment, the stirring devices 3 form knife devices 16.

During the moving of the pest removal device 1 through the vegetation/crops field in a first direction by connecting the pest removal device 1 to a tractor and moving the tractor in the first direction, i.e. in a movement direction, the stirring devices 3 will stir up the pest or unwanted animals/insects resting on the vegetation/crop, which physically will leave the vegetation/crops. At the same time, seeds of undesired weed, vegetation or crops, i.e. other material will be stirred up. The rotating brush device 4 arranged vertically above the stirring devices 3 and rotating around a second direction, different from the first direction, and preferably perpendicular to the first direction will force the pest or unwanted animals/insects or seeds of undesired weed, vegetation or crops in a direction opposite the first direction, i.e. in an negative first direction towards the collecting device 11. The brush device 4 either physically hits the pest or unwanted animals/insects or seeds of undesired weed, vegetation or crops or forces them by the wind draft created by the rotating brush device 4, or by the fan device or pressurized air d creation device or air flow creation device of the pivot shaft 8 creating a blowing effect, towards the opening 11b of the collecting device 11. Due to the rotation of the brush device 4 in a y-direction forcing the pest or unwanted animals/insects or seeds of undesired weed, vegetation or crops in a negative x-direction and the movement of the pest removal device 1 and the collecting device 11 in a positive x-direction the time period between stirring the pest or unwanted animals/insects and collecting them in the collecting device 11 can be minimized. If a fan device or negative air pressure creation or air pump or air flow creation device or suction device is arranged in the collecting device 11, for sucking the stirred pest or unwanted animals/insects seeds or undesired weed, vegetation or crops, in a negative x-direction, this effect can be further enhanced. Therefore the risk of not collecting the stirred pest or unwanted animals/insects seeds or undesired weed, vegetation or crops, is reduced. Thus, both the amount of pest in the field as well as the risk of spreading and thus increased growth of undesired weed, vegetation or crops, is reduced.

In the case of knife devices16 being arranged on the stirring devices 3, not only stirring of the pest or unwanted animals/insects is achieved but also the cutting of undesired weed having a coarser thickness than the desired vegetation or crops so that they may later fade while letting the narrower and desired vegetation or crops pass between the knife devices 16 through the distance between the knife devices 16. Undesired vegetations or crops that have been either fully excised or merely cut by the knife devices 16 may thus be forced by the brush device 4 towards the collecting device 11 according to a similar function as described for collecting of the pest or unwanted animals/insects or seeds of undesired weed, vegetation or crops above.

According to one embodiment, the optimal pest removal is carried out wherein the stirring devices 3 are without knife devices 16, i.e. wherein no knife devices 16 has been arranged to the stirring devices 3 of any frame section 2a, 2b, 2b' 2c, 2c'.

According to one embodiment, the first direction corresponds to x, the second direction corresponds to y and the third direction corresponds to z of the coordinate systems as defined in Fig. 1-7.

A preferred embodiment of a pest removal device according to the invention has been described. However, the person skilled in the art realizes that this can be varied within the limits of the claims.

## Claims

1. A pest removal device (1) adapted to be moved in relation to a ground surface of a field, the pest removal device (1) extending in at least a first direction and a second direction, wherein the first direction is the direction of travel of the pest removal device (1) and the second direction is non-parallel to the first direction, comprising a frame (2), wherein the frame (2) comprises at least one frame section (2a, 2b, 2b', 2c, 2c') wherein a plurality of stirring devices (3) are arranged on the frame section (2a, 2b, 2b', 2c, 2c'), wherein said plurality of stirring devices (3) are arranged spaced apart from each other at a distance (d) from each other in the second direction, the frame section (2a, 2b, 2b', 2c, 2c') further comprising
a device (4) pivotally arranged to the frame section (2a, 2b, 2b', 2c, 2c') to rotate around a pivot axis (8), wherein the pivot axis (8) extends in the second direction,
a collecting device (11),
wherein the device (4) is adapted to rotate in relation to the frame section (2a, 2b, 2b', 2c, 2c') whereby pest and/or other material is forced towards the collecting device (11) upon rotation of the device for collecting of pest and/or other material in the collecting device (11), **characterized in that** the device (4) is a brush device (4), wherein said plurality of stirring devices (3) are adapted for receiving a knife device (16), and a knife device (16) is arranged on each of said plurality of stirring devices (3), or wherein said plurality of stirring devices (16) form knife devices (16).

2. The pest removal device (1) according to claim 1, wherein said plurality of stirring devices (3) are arranged closer to the ground surface than the pivot axis (8), wherein the stirring devices (3) are formed as long and narrow bodies and extends in the first direction in their longest extension direction.

3. The pest removal device (1) according to any one of the preceding claims, wherein the pivot axis (8) is arranged above the stirring devices (3) in a third direction, non-parallel to the first and second directions, and in a rear position of the stirring devices (3) in a first direction, wherein the collection device (11) is arranged in a rear position of both the pivot axis (8) and the stirring devices (3) in a first direction.

4. The pest removal device (1) according to any one of the preceding claims, wherein the distance (d) between two consecutive stirring devices (3) are adjustable.

5. The pest removal device according to any one of the preceding claims, wherein a position adjusting device is provided for adjusting the position of the brush device (4) in a plane defined by the first and third directions.

6. The pest removal device (1) according to any of the preceding claims, wherein the distance between two consecutive knife devices (16) are adjustable.

7. The pest removal device (1) according to any one of the preceding claims, wherein the collecting device (11) comprises a wall portion (11a) and an opening (11b) in the wall portion (11b), is pivotally arranged in relation to the frame section (2a, 2b, 2b', 2c, 2c') around a pivot axis (12), wherein the collecting device (11) is adapted to be in a first position wherein the opening (11b) is essentially directed towards the first direction, and a second position wherein the opening is directed towards a third direction, wherein the third direction is perpendicular to the second direction.

8. The pest removal device (1) according to any one of the preceding claims, wherein the third direction is essentially directed towards the earth's center of gravitation, whereby collected pest and other material falls out of the collecting device (11) by the aid of gravitation in the second position.

9. The pest removal device (1) according to claim 1, wherein the collecting device (11a) comprises a compressing device for compressing the collected pest and other material in the container, to make it more compact.

10. The pest removal device (1) according to any one of the preceding claims, wherein the compressing device comprises a hydraulically driven compression device, such a hydraulic press.

11. The pest removal device (1) according to any one of the preceding claims, wherein, the frame (2) comprises a plurality of frame sections (2a, 2b, 2b', 2c, 2c') adapted to be connected to each other.

12. The pest removal device (1) according to any one of the preceding claims, wherein the second direction is perpendicular to the first direction, and the third direction is perpendicular to the first and second directions, wherein the first direction corresponds to an x-direction, the second direction corresponds to a y-direction and the third direction corresponds to a z-direction of a coordinate system.

13. The pest removal device (1) according to any one of the preceding claims, comprising a fan device or pressurized air creation device or an air flow creation device, for creating an air flow, and openings or perforations in the pivot axis (8), wherein the pest removal device (1) is adapted to direct the air flow from the pivot axis (8) towards the collecting device (11).

14. The pest removal device (1) according to any one of the preceding claims, comprising a fan device or negative air pressure creation device, or air pump or air flow creation device or suction device for creating an air flow, wherein the air flow may be directed towards the collecting device (11).

## Patentansprüche

1. Schädlingsentfernungsvorrichtung (1), die dazu ausgelegt ist, bezüglich einer Bodenfläche eines Feldes bewegt zu werden, wobei die Schädlingsentfernungsvorrichtung (1) sich in mindestens einer ersten Richtung und einer zweiten Richtung erstreckt, wobei die erste Richtung die Fortbewegungsrichtung der Schädlingsentfernungsvorrichtung (1) ist und die zweite Richtung nicht parallel zur ersten Richtung ist, umfassend einen Rahmen (2), wobei der Rahmen (2) mindestens einen Rahmenabschnitt (2a, 2b, 2b', 2c, 2c') umfasst, wobei eine Vielzahl von Rührvorrichtungen (3) an dem Rahmenabschnitt (2a, 2b, 2b', 2c, 2c') angeordnet ist, wobei die Vielzahl von Rührvorrichtungen (3) in der zweiten Richtung um einen Abstand (d) voneinander beabstandet angeordnet sind, wobei der Rahmenabschnitt (2a, 2b, 2b', 2c, 2c') ferner Folgendes umfasst
eine Vorrichtung (4), die schwenkbar an dem Rahmenabschnitt (2a, 2b, 2b', 2c, 2c') angeordnet ist, um sich um eine Schwenkachse (8) zu drehen, wobei die Schwenkachse (8) sich in der zweiten Richtung erstreckt,
eine Sammelvorrichtung (11),
wobei die Vorrichtung (4) dazu ausgelegt ist, sich bezüglich des Rahmenabschnitts (2a, 2b, 2b', 2c, 2c') zu drehen, wodurch Schädlinge und/oder anderes Material bei Drehung der Vorrichtung in Richtung der Sammelvorrichtung (11) gedrängt werden, um Schädlinge und/oder anderes Material in der Sammelvorrichtung (11) zu sammeln, **dadurch gekennzeichnet, dass** die Vorrichtung (4) eine Bürstenvorrichtung (4) ist, wobei die Vielzahl von Rührvorrichtungen (3) dazu ausgelegt sind, eine Messervorrichtung (16) aufzunehmen, und
eine Messervorrichtung (16) an jeder der Vielzahl von Rührvorrichtungen (3) angeordnet ist, oder wobei die Vielzahl von Rührvorrichtungen (16) Messervorrichtungen (16) bilden.

2. Schädlingsentfernungsvorrichtung (1) nach Anspruch 1, wobei die Vielzahl von Rührvorrichtungen (3) näher an der Bodenfläche angeordnet sind als die Schwenkachse (8), wobei die Rührvorrichtungen (3) als lange und schmale Körper gebildet sind und sich in der ersten Richtung in ihrer längsten Erstreckungsrichtung erstrecken.

3. Schädlingsentfernungsvorrichtung (1) nach einem der vorhergehenden Ansprüche, wobei die Schwenkachse (8) oberhalb der Rührvorrichtungen (3) in einer dritten Richtung, die nicht parallel zur ersten und zweiten Richtung ist, und in einer hinteren Position der Rührvorrichtungen (3) in einer ersten Richtung angeordnet ist, wobei die Sammelvorrichtung (11) in einer hinteren Position sowohl der Schwenkachse (8) als auch der Rührvorrichtungen (3) in einer ersten Richtung angeordnet ist.

4. Schädlingsentfernungsvorrichtung (1) nach einem der vorhergehenden Ansprüche, wobei der Abstand (d) zwischen zwei aufeinanderfolgenden Rührvorrichtungen (3) einstellbar ist.

5. Schädlingsentfernungsvorrichtung nach einem der vorhergehenden Ansprüche, wobei eine Positionseinstellvorrichtung zum Einstellen der Position der Bürstenvorrichtung (4) in einer von der ersten und dritten Richtung definierten Ebene vorgesehen ist.

6. Schädlingsentfernungsvorrichtung (1) nach einem der vorhergehenden Ansprüche, wobei der Abstand zwischen zwei aufeinanderfolgenden Messervorrichtungen (16) einstellbar ist.

7. Schädlingsentfernungsvorrichtung (1) nach einem der vorhergehenden Ansprüche, wobei die Sammelvorrichtung (11) einen Wandabschnitt (11a) und eine Öffnung (11b) in dem Wandabschnitt (11b) umfasst, um eine Schwenkachse (12) in Bezug auf den Rahmenabschnitt (2a, 2b, 2b', 2c, 2c') schwenkbar angeordnet ist, wobei die Sammelvorrichtung (11) dazu ausgelegt ist, sich in einer ersten Position zu befinden, in der die Öffnung (11b) im Wesentlichen in Richtung der ersten Richtung ausgerichtet ist, und sich in einer zweiten Position zu befinden, in der die Öffnung in Richtung einer dritten Richtung ausgerichtet ist, wobei die dritte Richtung senkrecht zu der zweiten Richtung ist.

8. Schädlingsentfernungsvorrichtung (1) nach einem der vorhergehenden Ansprüche, wobei die dritte Richtung im Wesentlichen zum Erdanziehungskraftzentrum ausgerichtet ist, wodurch gesammelte Schädlinge und anderes Material mithilfe der Erdanziehungskraft in der zweiten Position aus der Sammelvorrichtung (11) herausfallen.

9. Schädlingsentfernungsvorrichtung (1) nach Anspruch 1, wobei die Sammelvorrichtung (11a) eine Komprimiervorrichtung zum Komprimieren von Schädlingen und anderem Material in dem Behälter, um es kompakter zu machen, umfasst.

10. Schädlingsentfernungsvorrichtung (1) nach einem der vorhergehenden Ansprüche, wobei die Komprimiervorrichtung eine hydraulisch angetriebene Komprimiervorrichtung, wie eine Hydraulikpresse, umfasst.

11. Schädlingsentfernungsvorrichtung (1) nach einem der vorhergehenden Ansprüche, wobei der Rahmen (2) eine Vielzahl von Rahmenabschnitten (2a, 2b, 2b', 2c, 2c') umfasst, die dazu ausgelegt sind, miteinander verbunden zu werden.

12. Schädlingsentfernungsvorrichtung (1) nach einem der vorhergehenden Ansprüche, wobei die zweite Richtung senkrecht zu der ersten Richtung ist und die dritte Richtung senkrecht zu der ersten und zweiten Richtung ist, wobei die erste Richtung einer x-Richtung, die zweite Richtung einer y-Richtung und die dritte Richtung einer z-Richtung eines Koordinatensystems entspricht.

13. Schädlingsentfernungsvorrichtung (1) nach einem der vorhergehenden Ansprüche, die eine Gebläsevorrichtung oder eine mit Druck beaufschlagte Lufterzeugungsvorrichtung oder eine Luftstromerzeugungsvorrichtung zum Erzeugen eines Luftstroms und Öffnungen oder Perforationen in der Schwenkachse (8) umfasst, wobei die Schädlingsentfernungsvorrichtung (1) dazu ausgelegt ist, den Luftstrom von der Schwenkachse (8) in Richtung der Sammelvorrichtung (11) zu lenken.

14. Schädlingsentfernungsvorrichtung (1) nach einem der vorhergehenden Ansprüche, die eine Gebläsevorrichtung oder eine Luftunterdruckerzeugungsvorrichtung oder Luftpumpe oder Luftstromerzeugungsvorrichtung oder Absaugvorrichtung zum Erzeugen eines Luftstroms umfasst, wobei der Luftstrom in Richtung der Sammelvorrichtung (11) gelenkt werden kann.

## Revendications

1. Dispositif d'élimination de nuisible (1) adapté pour être déplacé par rapport à une surface de sol d'un champ, le dispositif d'élimination de nuisible (1) s'étendant dans au moins une première direction et une deuxième direction, dans lequel la première direction est la direction de trajet du dispositif d'élimination de nuisible (1) et la deuxième direction est non parallèle à la première direction, comprenant un châssis (2), dans lequel le châssis (2) comprend au moins une section de châssis (2a, 2b, 2b', 2c, 2c') dans lequel une pluralité de dispositifs d'agitation (3) sont agencés sur la section de châssis (2a, 2b, 2b', 2c, 2c'), dans lequel ladite pluralité de dispositifs d'agitation (3) sont agencés espacés les uns des autres à une distance (d) les uns des autres dans la deuxième direction, la section de châssis (2a, 2b, 2b', 2c, 2c') comprenant en outre
un dispositif (4) agencé de manière rotative à la section de châssis (2a, 2b, 2b', 2c, 2c') pour pivoter autour d'un axe de pivot (8), dans lequel l'axe de pivot (8) s'étend dans la deuxième direction,
un dispositif de collecte (11),
dans lequel le dispositif (4) est adapté pour pivoter par rapport à la section de châssis (2a, 2b, 2b', 2c, 2c') selon lequel un nuisible et/ou une autre matière est forcé vers le dispositif de collecte (11) lors de la rotation du dispositif pour collecter un nuisible et/ou une autre matière dans le dispositif de collecte (11), **caractérisé en ce que** le dispositif (4) est un dispositif à brosse (4), dans lequel ladite pluralité de dispositifs d'agitation (3) sont adaptés pour recevoir un dispositif à lame (16), et
un dispositif à lame (16) est agencé sur chacun de ladite pluralité de dispositifs d'agitation (3), ou dans lequel ladite pluralité de dispositifs d'agitation (16) forment des dispositifs à lame (16).

2. Dispositif d'élimination de nuisible (1) selon la revendication 1, dans lequel ladite pluralité de dispositifs d'agitation (3) sont agencés plus proches de la surface de sol que l'axe de pivot (8), dans lequel les dispositifs d'agitation (3) sont formés comme des corps longs et étroits et s'étendent dans la première direction dans leur direction d'extension la plus longue.

3. Dispositif d'élimination de nuisible (1) selon l'une quelconque des revendications précédentes, dans lequel l'axe de pivot (8) est agencé au-dessus des dispositifs d'agitation (3) dans une troisième direction, non parallèle aux première et deuxième directions, et dans une position arrière des dispositifs d'agitation (3) dans une première direction, dans lequel le dispositif de collecte (11) est agencé dans une position arrière de à la fois l'axe de pivot (8) et les dispositifs d'agitation (3) dans une première direction.

4. Dispositif d'élimination de nuisible (1) selon l'une quelconque des revendications précédentes, dans lequel la distance (d) entre deux dispositifs d'agitation (3) consécutifs est réglable.

5. Dispositif d'élimination de nuisible selon l'une quelconque des revendications précédentes, dans lequel un dispositif de réglage de position est fourni pour régler la position du dispositif à brosse (4) dans un plan défini par les première et troisième directions.

6. Dispositif d'élimination de nuisible (1) selon l'une quelconque des revendications précédentes, dans lequel la distance entre deux dispositifs à lame (16) consécutifs est réglable.

7. Dispositif d'élimination de nuisible (1) selon l'une quelconque des revendications précédentes, dans lequel le dispositif de collecte (11) comprend une partie de paroi (11a) et une ouverture (11b) dans la partie de paroi (11b), est agencé de manière rotative par rapport à la section de châssis (2a, 2b, 2b', 2c, 2c') autour d'un axe de pivot (12), dans lequel le dispositif de collecte (11) est adapté pour être dans une première position dans laquelle l'ouverture (11b) est sensiblement dirigée vers la première direction, et une seconde position dans laquelle l'ouverture est dirigée vers une troisième direction, dans lequel la troisième direction est perpendiculaire à la deuxième direction.

8. Dispositif d'élimination de nuisible (1) selon l'une quelconque des revendications précédentes, dans lequel la troisième direction est sensiblement dirigée vers le centre de gravitation de la terre, selon lequel le nuisible et autre matière collectés tombent hors du dispositif de collecte (11) à l'aide de la gravitation dans la seconde position.

9. Dispositif d'élimination de nuisible (1) selon la revendication 1, dans lequel le dispositif de collecte (11a) comprend un dispositif de compression pour compresser le nuisible et autre matière collectés dans le conteneur, pour les rendre plus compacts.

10. Dispositif d'élimination de nuisible (1) selon l'une quelconque des revendications précédentes, dans lequel le dispositif de compression comprend un dispositif de compression entraîné hydrauliquement, tel qu'une presse hydraulique.

11. Dispositif d'élimination de nuisible (1) selon l'une quelconque des revendications précédentes, dans lequel le châssis (2) comprend une pluralité de sections de châssis (2a, 2b, 2b', 2c, 2c') adaptées pour être raccordées les uns aux autres.

12. Dispositif d'élimination de nuisible (1) selon l'une quelconque des revendications précédentes, dans lequel la deuxième direction est perpendiculaire à la première direction, et la troisième direction est perpendiculaire aux première et deuxième directions, dans lequel la première direction correspond à une direction x, la deuxième direction correspond à une direction y et la troisième direction correspond à une direction z d'un système de coordonnées.

13. Dispositif d'élimination de nuisible (1) selon l'une quelconque des revendications précédentes, comprenant un dispositif de ventilateur ou un dispositif de création d'air pressurisé ou un dispositif de création de flux d'air, pour créer un flux d'air, et des ouvertures ou des perforations dans l'axe de pivot (8), dans lequel le dispositif d'élimination de nuisible (1) est adapté pour diriger le flux d'air depuis l'axe de pivot (8) vers le dispositif de collecte (11).

14. Dispositif d'élimination de nuisible (1) selon l'une quelconque des revendications précédentes, comprenant un dispositif de ventilateur ou un dispositif de création de pression d'air négative, ou une pompe à air ou un dispositif de création de flux d'air ou un dispositif d'aspiration pour créer un flux d'air, dans lequel le flux d'air peut être dirigé vers le dispositif de collecte (11).
